(19) Europäisches Patentamt
European Patent Office
Office européen des brevets

(11) **EP 3 239 738 B1**

(12) **EUROPEAN PATENT SPECIFICATION**

(45) Date of publication and mention
of the grant of the patent:
**05.05.2021 Bulletin 2021/18**

(21) Application number: **17163170.8**

(22) Date of filing: **27.03.2017**

(51) Int Cl.:
*G01C 11/02* (2006.01)     *G01S 17/86* (2020.01)
*G08G 1/0962* (2006.01)    *G08G 1/16* (2006.01)
*G01S 13/42* (2006.01)     *G01S 13/86* (2006.01)
*G01S 5/16* (2006.01)      *G01S 17/42* (2006.01)
*G01S 13/06* (2006.01)

(54) **PRIORITIZED SENSOR DATA PROCESSING USING MAP INFORMATION FOR AUTOMATED VEHICLES**

PRIORISIERTE SENSORDATENVERARBEITUNG MIT KARTENINFORMATIONEN FÜR AUTOMATISCHE FAHRZEUGE

TRAITEMENT PRIORITAIRE DE DONNÉES DE CAPTEUR AU MOYEN D'INFORMATIONS CARTOGRAPHIQUES POUR VÉHICULES AUTOMATISÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2016 US 201615135807**

(43) Date of publication of application:
**01.11.2017 Bulletin 2017/44**

(60) Divisional application:
**21154938.1**

(73) Proprietor: **Aptiv Technologies Limited**
**St. Michael (BB)**

(72) Inventors:
• **YUAN, Ping**
**Simi Valley, CA 93063 (US)**
• **IZZAT, Izzat H.**
**Oak Park, CA 91377 (US)**

(74) Representative: **Manitz Finsterwald**
**Patent- und Rechtsanwaltspartnerschaft mbB**
**Postfach 31 02 20**
**80102 München (DE)**

(56) References cited:
EP-A2- 0 919 828     JP-A- 2003 040 036
US-A- 5 745 070      US-A1- 2008 024 353

## Description

## TECHNICAL FIELD OF INVENTION

This disclosure generally relates to an object-detection system for an automated vehicle, and more particularly relates to a system that defines a region-of-interest within the field-of-view of an object-detector based on a roadway-characteristic, and preferentially-processes information from the region-of-interest.

## BACKGROUND OF INVENTION

It is known to equip an automated-vehicle with sensors to observe or detect object proximate to the automated vehicle. However, the processing power necessary to process all of the information available from the sensors for the entire area surrounding the automated vehicle make the cost of the processing equipment undesirable expensive. Document US2008/024353A1 relates to a radar sensor and a method for its operation. Document US5745070A relates to a scan-type radar provided on a vehicle. Document JP2003040036A relates to a vehicle periphery visual confirmation apparatus for presenting to a driver by imaging a lateral direction of view of the vehicle.

## SUMMARY OF THE INVENTION

In accordance with one embodiment, an object-detection system for an automated vehicle is provided as set out in claim 1.
Further features and advantages will appear more clearly on a reading of the following detailed description of the preferred embodiment, which is given by way of non-limiting example only and with reference to the accompanying drawings.

## BRIEF DESCRIPTION OF DRAWINGS

The present invention will now be described, by way of example with reference to the accompanying drawings, in which:

  Fig. 1 depicts a block diagram of the system;
  Fig. 2 depicts sensor coverage in the proximity of the host-vehicle by the system of Fig. 1;
  Fig. 3 depicts an implementation example of the system of Fig. 1 using centralized controller;
  Figs. 4A and 4B depict adjusting the angular-resolution in ROI by the system of Fig. 1; and
  Figs. 5A and 5B depict a signal-to-noise ratio improvement through averaging by the system of Fig. 1.

## DETAILED DESCRIPTION

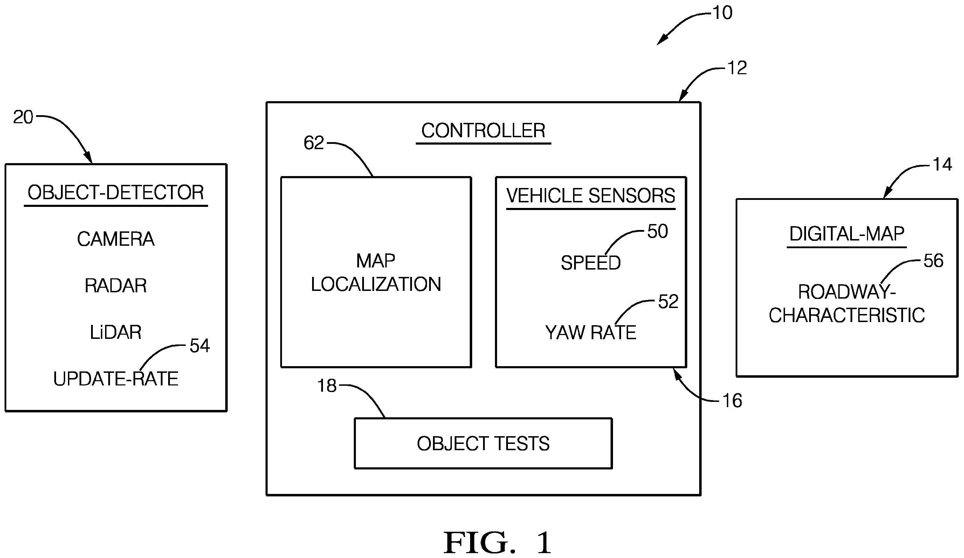

Fig. 1 illustrates a non-limiting example of an object-detection system 10, hereafter referred to as the system 10. The system 10 is suitable for use on an automated vehicle, hereafter the host-vehicle 22. The system 10 includes an object-detector 20 that may include a variety of sensors 36 used to observe a field of view 32 for detecting objects in the proximity of the host-vehicle 22. By way of example and not limitation, the sensors 36 in the object-detector 20 may include a camera, a radar-unit, a lidar-unit, or any combination thereof. The controller 12 may also include or be in communication with a vehicle sensor 16 adapted to measure speed 50 of the host-vehicle 22 and yaw-rate 52 of the host-vehicle 22. Information from the object-detector 20 sensors 36 may be processed by the objects-tests 18 in a controller 12 to detect an object 58 in the field-of-view 32.
The system 10 also includes a digital-map 14 that indicates a roadway-characteristic 56 proximate to the host-vehicle 22. The digital-map 14 and vehicle sensor 16 are used to define the type of environments and modes around the host-vehicle 22. The host-vehicle 22 is localized to the digital-map 14 using map localization 62 in the controller 12.
The controller 12 is configured to define a region-of-interest 24 within the field-of-view 32 based on the roadway-characteristic 56, and preferentially-process information from the object-detector 20 that corresponds to the region-of-interest 24. As used herein, the roadway-characteristic 56 may define a subset of the digital-map 14 including lane and road attributes, and preferentially-process may indicate focusing on the region-of-interest 24 in order to acquire denser and more accurate sensor data, processing the data within the region-of-interest 24 at a higher rate, assigning higher processing and communication resources to the region-of-interest 24 and adjusting parameters and algorithms for object-tests 18 in the region-of-interest 24.
Advanced Driver Assistance Systems (ADAS) and automated vehicles are equipped with a variety of sensors 36 such as a lidar-unit, a radar-unit, and/or a camera to observe the area around the host-vehicle 22. The field-of-view 32 (FOV) 32 of these sensors 36 can cover up to 360° around the host-vehicle 22. These sensors 36 are used to detect an object 58 around the host-vehicle 22 and to decide on the actions to take based on the environment surrounding the host-vehicle 22. The use of these sensors 36 puts a significant burden on the host-vehicle 22 processing and communication resources as large amounts of data need to be captured by the sensors 36, transferred to processing units, and processed by the processing units on-board the host-vehicle 22 for object 58 detection and other functions. This consequently increases the complexity and cost of the system 10. An approach for selecting the region-of-interest 24, hereafter referred to as the ROI 24, to focus processing based on the roadway-characteristics 56 as determined by a digital-map 14 device is presented. For example, if on a highway processing can be focused on the front part of the host-vehicle 22 and more processing and communication resources are allocated to the data stream from the front sensor.

To overcome the shortcomings of sensors 36, a digital-map 14 is currently playing significant role in many ADAS and autonomous vehicle systems. The digital-map 14 provides valuable information that can be used for control and path planning among other applications. The information provided by the digital-map 14 varies by map providers. In automotive application, the digital-map 14 provides geometric information and other attributes about the road. In general, output from the digital-map 14 may include, but is not limited to: a map of future points describing the road, curvature of the road, lane marking types, lane width, speed 50 limit, number of lanes, presence of exit ramp, barrier, sign locations, etc. The digital-map 14 can be used for a variety of tasks such as to improve perception algorithms by using the digital-map 14 as a priori information or by treating the digital-map 14 as a virtual sensor. A subset of the digital-map 14 information in the proximity of the host-vehicle 22 defining the environment surrounding the host-vehicle 22 including geometrical and road attributes is used to define a ROI 24 around the host-vehicle 22. This subset of information will be referred to as roadway-characteristic 56. It should be noted that roadway-characteristic 56 is only a subset of the digital-map 14 since some digital-map 14 information such as freeway name and number are not required for the purpose of defining the ROI 24. The ROI 24 focuses the sensor acquisition and processing on a small area and hence provides significant saving in processing and communications requirements.

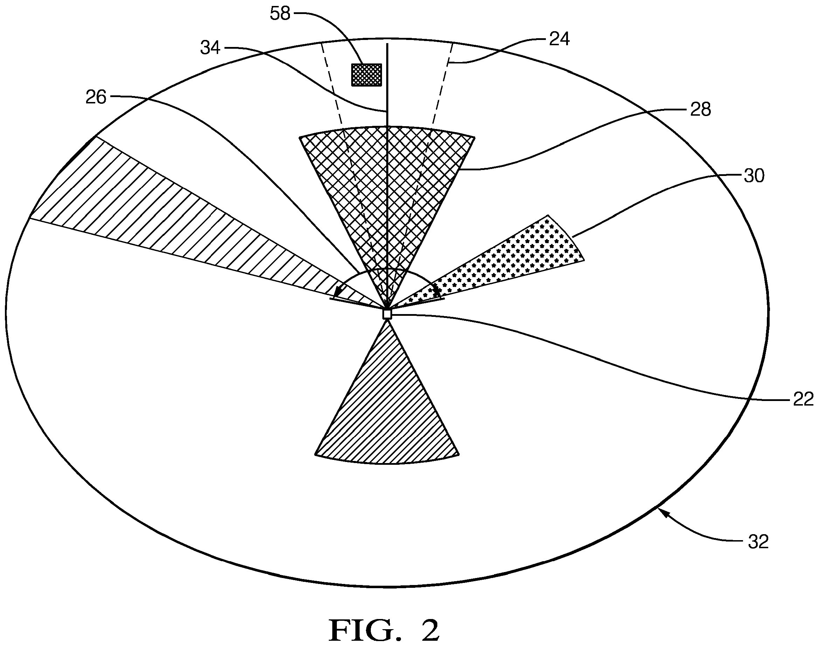

Fig. 2 shows an example of a host-vehicle 22 equipped with a 360° field-of-view 32. The figure shows an example of the ROI 24 selected on a highway. The figure also shows an example on a curved road 30 and an example on an intersection 26 where processing should focus on certain angles to the side of the host-vehicle 22. It is important not to completely ignore areas outside the ROI 24 as it may contain important information for the host-vehicle 22. Depending on processing and communication capabilities of the host-vehicle 22, the processing of other sectors can be prioritized to a lower rate.

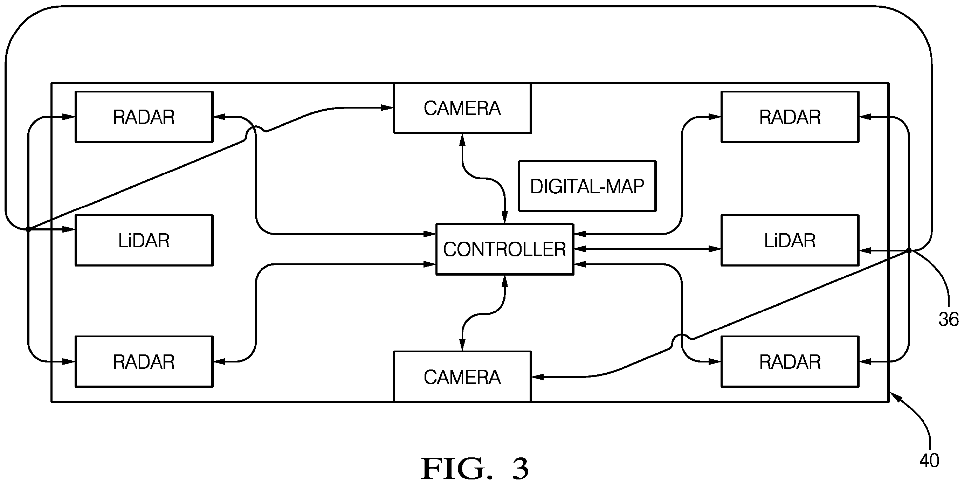

There are a number of methods for defining the ROI 24 based on the roadway-characteristic 56. In one embodiment, the object-detector 20 sensors 36 are by collected by multiple devices in a distributed fashion before being communicated to the controller 12. Roadway-characteristic 56 can be delivered to the host-vehicle 22 using an external link or stored in the host-vehicle 22 for previously defined route. In a preferred embodiment of the present invention, object-detector 20 sensors 36 are collected using a centralized approach 40 as shown in Fig. 3. In Fig. 3 the output of sensors 36 is directed into the controller 12 using Ethernet or other connector types. The controller 12 then decides what portions of the sensor to keep and what to throw away based on the selected region of the ROI 24.

In another possible variation, the controller 12 sends signals to the sensors 36 turning them on and off as needed. The advantage of this approach is that it can save power but may not be possible for many sensors 36. Based on the knowledge of the sensors 36 in the object-detector 20, the controller 12 may elect to combine the two methods described above where sensors 36 that can be power controlled are turned off outside the ROI 24 while for other sensors 36 the controller 12 ignore or keep sensor measurements as required by the ROI 24 definition.

Speed 50 of the host-vehicle 22 has significant impact on the ROI 24 for proper object 58 detection. The 3-second rule has been widely used for car following. It is typically used to check the amount of room to leave in front of the host-vehicle 22 such that the driver is prepared to break in the case the car in front of them stop or slow down. The 3-second rule can be significantly impacted by road condition and visibility. As an example, the 3-second rule can be doubled in case of rain, fog, snow, night etc. In one embodiment, the range 34 of the ROI 24 is determined by the speed 50 of the host-vehicle 22 by using the 3-second rule as a guideline. In this approach, host-vehicle 22 speed 50 is used to determine the range 34 of the ROI 24 using the formula 3 * meters/second, where 3 is from the 3-second rule and meters/second is calculated from the host-vehicle 22 speed 50. As an example, for a host-vehicle 22 travelling at speed 50 of one-hundred kilometers-perhour (100kph), the range 34 of the ROI 24 should be around eighty-five meters (85m). The range 34 of the ROI 24 may be smaller at a lower speed 50. Fig. 2 shows an example of high speed ROI 24 and low speed ROI 28. The range 34 in high speed ROI 24 can be extended up to the maximum range of the sensor. The FOV of the lower speed ROI 28 can be increased if necessary. It should be noted that it is straight forward to extend the range 34 of the ROI 24 using weather information such as rain as an example. Using the example above, the ROI 24 would be extended to 170 meters in case of rain. Rain sensing may be done using host-vehicle 22 rain sensor widely used for controlling the windshield wiper.

Another factor that impacts the ROI 24 is the yaw-rate 52 of the host-vehicle 22. Most examples of the host-vehicle 22 are equipped with a sensor to measure a host-vehicle's angular-velocity 48 around its vertical axis referred to as yaw-rate 52. The controller 12 should use the yaw-rate 52 to determine the direction of the ROI 24 in the proximity of the host-vehicle 22. As the host-vehicle 22 curve to the left or right, the ROI 24 should be adjusted to align with the host-vehicle 22. Fig. 2 shows an example with the ROI 24 focused on the right side 30 of the host-vehicle 22. The sensor used in the ROI 24 can be selected from the sensors 36 in the ROI 24 or from rotating a sensor to better match the ROI 24. Similarly, the ROI 24 can be adjusted based on the road curvature as determined from the roadway-characteristics 56.

In a typical object 58 detection system 10, multiple objects classes such as vehicle, pedestrian, and bicycles are detected. The number of object 58 classes can grow very large which put a lot of demands on processing and communication needs in the host-vehicle 22. Limiting the number of object 58 types to detect may significantly save on the processing and communication needs of the host-vehicle 22.

In one embodiment, the roadway-characteristics 56 provides the controller 12 attributes to help decide what and how often to run the object-tests 18 in the ROI 24. As an example, one of the attributes in the roadway-characteristics 56 is the type of lane mark in the proximity of the host-vehicle 22. There are many types of lane mark such as boots dot, solid or dotted line. Algorithm for detecting these types of lane mark can differ significantly. Hence the controller 12 can access this information from the roadway-characteristics 56 and decide on the type of lane mark detection algorithm to run in the object-tests 18. In addition to the lane mark algorithm type, the roadway-characteristics 56 can provide information to adjust the parameters of the algorithm based on the map information. As an example, based on the road type, the width of the lane can be determined which vary between highway, residential etc.

In another embodiment, the number of algorithms to run can be adjusted based on attributes from the roadway-characteristics 56. As an example, if the map indicates that the host-vehicle 22 is currently on a limited access highway, the likelihood of having a pedestrian or bicycle is very low. Hence pedestrian or bicycle detection algorithm do not run or executed at a reduced rate. This can result in large saving on processing demands in the host-vehicle 22.

In addition to the saving in processing power, and sensor selections, ROI 24 selection can be used to enhance sensor output. As an example, there is a tradeoff between the FOV/image-resolution 48 versus range 34 of a sensor. With the incorporation of the map information the tradeoff can be shifted dynamically. For example, the FOV of the sensor can be increased with better image resolution 48 while reducing range 34 in urban area (or do the opposite for highway). This can significantly benefit processing and algorithm performance.

The ROI 24 can be assigned dynamically with higher angular-resolution 48 and update rates 54 while maintaining lower angular-resolution 48 and update rates 54 for the surveillance in areas outside the ROI 24. For example, FOV can be increased with better image resolution 48 while reducing range 34 in urban area; on the other hand, the range 34 can be increased and the FOV reduced in highway driving and have it follow the route according to the map and/or the targets picked up by the surveillance function. The ROI 24 can be implemented by zooming in and out of the optical system in the object-detector 20 in operation and/or dynamically changing the scanning pattern of a scanning LIDAR in the object-detector 20.

In one embodiment, sensor update rate 54 is controlled based on the road-characteristic. The main idea is based on the fact that the ROI 24 is important and hence higher update rate 54 is needed as compared to other regions around the host-vehicle 22. As an example, if the sensor is capable of updating the FOV at 10 scans/sec, the area in the ROI 24 is scanned at 10 frames/sec while scanning other parts of the FOV at 2 scans/sec. This can dramatically reduce the amount of bits to communicate and process.

Adjusting the update rate 54 of a sensor may be implemented in a number of ways depending on the sensor type. Two methods are described below. In the first method, some sensors 36 would allow the power to be turned off as certain parts of the FOV are scanned. For these sensors 36, the controller 12 issues a signal to turn off the sensor outside the ROI 24 while keeping the sensor turned on inside the ROI 24. For sensors 36 that cannot be turned off a second method is needed. In the second method, the controller 12 selectively ignores sensor detection in order to achieve the desired update rate 54. The controller 12 keeps the sensor information inside the ROI 24 while dropping the sensor information outside the ROI 24. A combination of the first method and the second method is also possible, where sensors 36 that can be power controlled are processed by the first method while other sensors 36 are processed by the second method. It should be noted that, the first method is preferable since it saves power.

In addition to using mapping information to select ROI 24, roadway-characteristics 56 can be used to determine the type of sensor to use within the selected ROI 24. Typical example of the object-detector 20 may include plurality of sensors 36 such as lidar, camera, and radar. In one example, camera has been used for lane mark detection. In some cases when lightening condition is not good, such as in a tunnel, lidar laser reflectance may be used instead of a camera. In another example, Radar is used for long range, high speed object 58 detection. In yet another example, LiDAR is used for pedestrian detection in urban areas since it provides large number of detections as compared to other sensors 36.

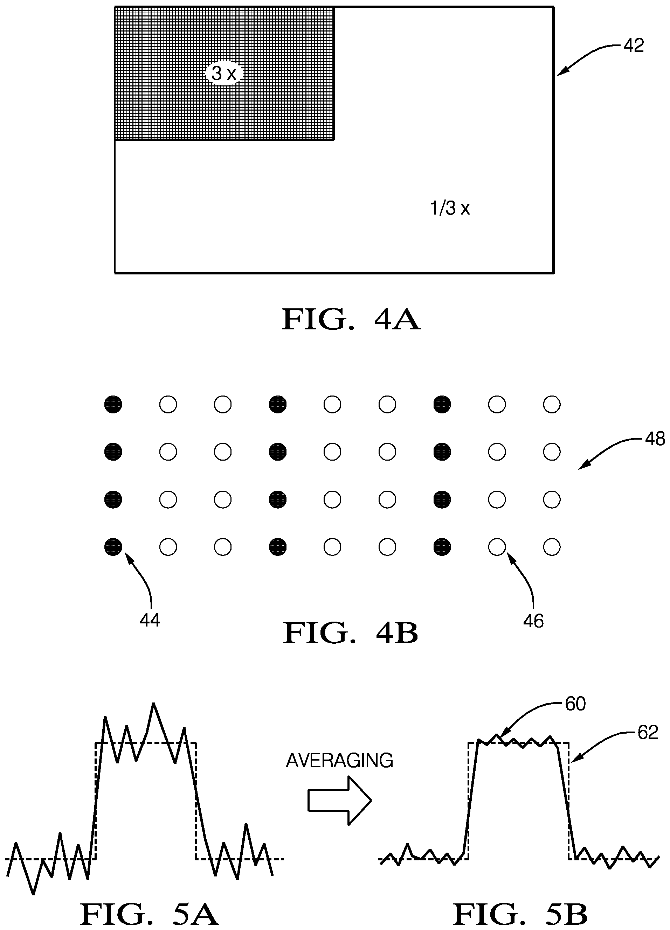

The pixel throughput, or the measurements that can be done in a given time period, of a LIDAR sensor in an object-detector 20 is limited. By reducing the update rate 54 outside the ROI 24, more effective measurements can be used in a given time or pixel throughput in the ROI 24. One way to utilize the increased pixel throughput is to distribute them in the ROI 24, evenly or non-evenly, and result in a higher overall pixel density, which means higher angular- resolution 48 in this region. For example, if the ROI 24 is chosen to be one-fourth (¼) of the sensor FOV as shown in Fig. 4A and the update rate 54 out of the sensor is reduced by a factor of one-third (1/3), the pixel throughput in the ROI 24 will be three times (3x) of the original one. If the line count is kept the same in the ROI 24, the point density in a scan line can be increased to 3x as a result. In Fig. 4B, the original pixel matrix is illustrated with solid dots 44 and the increased pixels are shown in hollow dots 46.

Another way to utilize the increased pixel throughput is to keep the original scanning image grid but increase the signal-to-noise ratio (SNR) by averaging multiple measurements for the same point. This improvement in SNR is shown in Fig. 5. The measurement before averaging is shown in Fig. 5A while the data after averaging is shown in Fig. 5B. This increased SNR allows for the detection of weaker signals or returns from farther objects while maintaining the original detection criteria. In the example shown in Fig. 4A, the 3x pixel throughput will allow for averaging of three measurements for each image pixel while keeping the original image update-rate 54 in the ROI 24. With averaging, the SNR will increase by a factor of the square-root of three $(\sqrt{3} \times)$ in amplitude or about 4.7 dB, and the range will increase by $\sqrt[4]{3} \times$.

For the same reason, by averaging multiple measurements for the same point, the SNR for each pixel will improve. For the target at the same distance, a better SNR means better detection probability and lower false alarm rate (FAR), or a better image quality. In the example shown in Fig. 4A, the SNR will increase by $\sqrt{3} \times$ in amplitude or 4.7 dB. If the original SNR is 10 dB, it is now 14.7 dB in ROI 24.

Camera is an integral part of most object-detector 20. It is most widely used to cover the front of the host-vehicle 22 but it may also be used to cover the full 360° field-of-view 32 of the host-vehicle 22. In one embodiment, the camera is zoomed in and out to better match the ROI 24. Adjusting the zoom information is a relatively simple operation and can be managed by the controller 12. The camera can also be rotated in case the ROI 24 is on the side of the host-vehicle 22 with no sufficient camera coverage.

While this invention has been described in terms of the preferred embodiments thereof, it is not intended to be so limited, but rather only to the extent set forth in the claims that follow.

## Claims

1. An object-detection system (10) for an automated vehicle, said system (10) comprising:

> an object-detector (20) used to observe a field-of-view (32) proximate to a host-vehicle (22); the object-detector (20) including a plurality of type of sensors (36) such as lidar, camera and/or radar,
> a digital-map (14) used to indicate a roadway-characteristic (56) proximate to the host-vehicle (22); and

> a controller (12) configured to define a region-of-interest (24) within the field-of-view (32) based on the roadway-characteristic (56), and preferentially-process information from the object-detector (20) that corresponds to the region-of-interest (24), **characterized in that** the controller is configured to determine the type of sensors (36) to use within the ROI (24) based on the roadway-characteristic (56).

2. The system (10) in accordance with claim 1, wherein the system (10) includes a vehicle sensor (16) used to indicate a speed (50) of the host-vehicle (22), and the controller (12) is further configured to define the region-of-interest (24) based on the speed (50) of the host-vehicle (22).

3. The system (10) according to any one of the preceding claims, wherein the system (10) includes a vehicle sensor (16) used to indicate a yaw-rate (52) of the host-vehicle (22), and the controller (12) is further configured to define the region-of-interest (24) based on the yaw-rate (52).

4. The system (10) according to any one of the preceding claims, wherein the system (10) is configured to determine which of a plurality of object-tests (18) is used to identify an object (58) in the region-of-interest (24) based on the roadway-characteristic (56).

5. The system (10) according to any one of the preceding claims, wherein the controller (12) is further configured to vary an update-rate of a sensor based on the roadway-characteristic (56).

6. The system (10) according to any one of the preceding claims, wherein the controller (12) is further configured to vary an angular-resolution (48) of a sensor based on the roadway-characteristic (56).

7. The system (10) according to any one of the preceding claims, wherein the controller (12) is further configured to extend a range (34) of a sensor based on the roadway-characteristic (56).

8. The system (10) according to any one of the preceding claims, wherein the controller (12) is further configured to increase a signal-to-noise of a sensor measurement based on the roadway-characteristic (56).

9. The system (10) according to any one of the preceding claims, wherein the object-detector (20) includes a camera, and the controller (12) is further configured to vary the field-of-view (32) of the camera based on the roadway-characteristic (56).

**Patentansprüche**

1. Objektdetektionssystem (10) für ein automatisiertes Fahrzeug, wobei das System (10) umfasst:

   eine Objektdetektionsvorrichtung (20), die verwendet wird, um ein Sichtfeld (32) in der Nähe eines Hostfahrzeugs (22) zu beobachten; wobei die Objektdetektionsvorrichtung (20) mehrere Typen von Sensoren (36) umfasst, etwa Lidar, Kamera und/oder Radar,
   eine digitale Landkarte (14), die verwendet wird, um eine Eigenschaft (56) der Fahrstraße in der Nähe des Hostfahrzeugs (22) anzuzeigen; und
   ein Steuergerät (12), das konfiguriert ist, um einen interessierenden Bereich (24) innerhalb des Sichtfelds (32) auf der Grundlage der Eigenschaft (56) der Fahrstraße zu definieren, und um Informationen von der Objektdetektionsvorrichtung (20) bevorzugt zu verarbeiten, die dem interessierenden Bereich (24) entsprechen, **dadurch gekennzeichnet, dass** das Steuergerät konfiguriert ist, um den Typ der Sensoren (36), die innerhalb des interessierenden Bereichs (24) verwendet werden sollen, auf der Grundlage der Eigenschaft (56) der Fahrstraße zu bestimmen.

2. System (10) nach Anspruch 1, wobei das System (10) einen Fahrzeugsensor (16) enthält, der verwendet wird, um eine Geschwindigkeit (50) des Hostfahrzeugs (22) anzuzeigen, und das Steuergerät (12) ferner konfiguriert ist, um den interessierenden Bereich (24) auf der Grundlage der Geschwindigkeit (50) des Hostfahrzeugs (22) zu definieren.

3. System (10) nach einem der vorstehenden Ansprüche, wobei das System (10) einen Fahrzeugsensor (16) enthält, der verwendet wird, um eine Gierrate (52) des Hostfahrzeugs (22) anzuzeigen, und das Steuergerät (12) ferner konfiguriert ist, um den interessierenden Bereich (24) auf der Grundlage der Gierrate (52) zu definieren.

4. System (10) nach einem der vorstehenden Ansprüche, wobei das System (10) konfiguriert ist, um zu bestimmen, welcher von mehreren Objekttests (18) verwendet wird, um ein Objekt (58) in dem interessierenden Bereich (24) auf der Grundlage der Eigenschaft (56) der Fahrstraße zu identifizieren.

5. System (10) nach einem der vorstehenden Ansprüche, wobei das Steuergerät (12) ferner konfiguriert ist, um eine Aktualisierungsrate eines Sensors auf der Grundlage der Eigenschaft (56) der Fahrstraße zu verändern.

6. System (10) nach einem der vorstehenden Ansprüche, wobei das Steuergerät (12) ferner konfiguriert ist, um eine Winkelauflösung (48) eines Sensors auf der Grundlage der Eigenschaft (56) der Fahrstraße zu verändern.

7. System (10) nach einem der vorstehenden Ansprüche, wobei das Steuergerät (12) ferner konfiguriert ist, um eine Reichweite (34) eines Sensors auf der Grundlage der Eigenschaft (56) der Fahrstraße zu vergrößern.

8. System (10) nach einem der vorstehenden Ansprüche, wobei das Steuergerät (12) ferner konfiguriert ist, um einen Signal-Rausch-Abstand einer Sensormessung auf der Grundlage der Eigenschaft (56) der Fahrstraße zu erhöhen.

9. System (10) nach einem der vorstehenden Ansprüche, wobei die Objektdetektionsvorrichtung (20) eine Kamera enthält, und wobei das Steuergerät (12) ferner konfiguriert ist, um das Sichtfeld (32) der Kamera auf der Grundlage der Eigenschaft (56) der Fahrstraße zu verändern.

**Revendications**

1. Système de détection d'objets (10) pour un véhicule automatisé, ledit système (10) comprenant :

   un détecteur d'objets (20) utilisé pour observer un champ de vision (32) à proximité d'un véhicule hôte (22), le détecteur d'objets (20) incluant une pluralité de types de capteurs (36) tels que lidar, caméra et/ou radar,
   une carte numérique (14) utilisée pour indiquer une caractéristique de route (56) à proximité du véhicule hôte (22) ; et
   un dispositif de commande (12) configuré pour définir une région d'intérêt (24) dans le champ de vision (32) sur la base de la caractéristique de route (56) et traiter préférentiellement les informations provenant du détecteur d'objets (20) qui correspondent à la région d'intérêt (24), **caractérisé en ce que** le dispositif de commande est configuré pour déterminer le type de capteurs (36) à utiliser dans la région d'intérêt (24) sur la base de la caractéristique de route (56).

2. Système (10) selon la revendication 1, dans lequel le système (10) inclut un capteur de véhicule (16) utilisé pour indiquer une vitesse (50) du véhicule hôte (22) et le dispositif de commande (12) est en outre configuré pour définir la région d'intérêt (24) sur la base de la vitesse (50) du véhicule hôte (22).

3. Système (10) selon l'une quelconque des revendications précédentes, dans lequel le système (10) inclut un capteur de véhicule (16) utilisé pour indiquer un taux de lacet (52) du véhicule hôte (22) et le dispositif de commande (12) est en outre configuré pour définir la région d'intérêt (24) sur la base du taux de lacet (52).

4. Système (10) selon l'une quelconque des revendications précédentes, dans lequel le système (10) est configuré pour déterminer lequel d'une pluralité de tests d'objet (18) est utilisé pour identifier un objet (58) dans la région d'intérêt (24) sur la base de la caractéristique de route (56).

5. Système (10) selon l'une quelconque des revendications précédentes, dans lequel le dispositif de commande (12) est en outre configuré pour faire varier un taux de mise à jour d'un capteur sur la base de la caractéristique de route (56).

6. Système (10) selon l'une quelconque des revendications précédentes, dans lequel le dispositif de commande (12) est en outre configuré pour faire varier une résolution angulaire (48) d'un capteur sur la base de la caractéristique de route (56).

7. Système (10) selon l'une quelconque des revendications précédentes, dans lequel le dispositif de commande (12) est en outre configuré pour étendre une portée (34) d'un capteur sur la base de la caractéristique de route (56).

8. Système (10) selon l'une quelconque des revendications précédentes, dans lequel le dispositif de commande (12) est en outre configuré pour augmenter un rapport signal/bruit d'une mesure de capteur sur la base de la caractéristique de route (56).

9. Système (10) selon l'une quelconque des revendications précédentes, dans lequel le détecteur d'objets (20) inclut une caméra et le dispositif de commande (12) est en outre configuré pour faire varier le champ de vision (32) de la caméra sur la base de la caractéristique de route (56).

FIG. 1

EP 3 239 738 B1

FIG. 2

FIG. 3

FIG. 4A

FIG. 4B

FIG. 5A

AVERAGING

FIG. 5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008024353 A1
- US 5745070 A

- JP 2003040036 A